# EUROPEAN PATENT APPLICATION

(11) **EP 4 177 581 A1**
(43) Date of publication of application: **10.05.2023**
(21) Application number: 21788632.4
(22) Date of filing: 15.04.2021
(51) Int. Cl.: G01H 11/08, G01V 1/00

(54) **BURIED-PIPE DAMAGE LOCATION DETECTION DEVICE**

(30) Priority: 18.04.2020 JP 2020074446
(71) Applicant: Fuji Tecom Inc., Tokyo 101-0025 (JP)
(72) Inventor: KOJIMA, Takashi, Tokyo 101-0025 (JP); KUBOTA, Kenshi, Tokyo 101-0025 (JP); SEKIGUCHI, Yasuhito, Tokyo 101-0025 (JP); MIKAMI, Takahiro, Tokyo 101-0025 (JP)
(74) Representative: Barker Brettell LLP
(86) International application number: PCT/JP2021/015584
(87) International publication number: WO 2021/210643

(57) **Abstract**

[Subject]

It relates to the device for detecting damage location of buried-pipe buried in the ground etc., in particular, it relates buried-pipe damage location detection device that detecting damage location of buried-pipe, having a few manual operation buttons, and having a universal design that can be used by both right-handed and left handed inspector.

[Means for Solution]

While a buried-pipe damage location detection device 1 comprised by a body 2 being portable and having an operation unit 2a arranged a display screen 3 and an operation switch 8 on an upper surface, a pickup sensor 12 with a hand switch 11 connected to this body 2, and a headphone 10 connecting to the body 2 and hearing a leakage sound caught by the pickup sensor 12, furthermore, in the buried-pipe damage location detection device 1, the body 2 has a function to filter the leakage sound, a function to set a cutoff frequency of a filter for filtering the leakage sound, a switch function of the operation switch 8, and a function to process the leakage sound to be able to heard with the headphone 10, wherein the body 2 has a screen reversal function to reverse an orientation of a screen displayed on the display screen 3, a function to reverse the switch function of the operation switch 8 according to the orientation of the display screen 3, and a function to save a contents of a setting, wherein the display screen 3 consists of a starting screen 6 displayed only at the time of starting, a setting item indication 7a displayed a setting item, a setting contents indication 7b displayed a setting contents of this setting item indication 7a, and an usual screen 7 displayed the setting contents of the setting and a volume level of leakage sound caught by the pickup sensor 12, wherein the operation switch 8 consists of one Decision/ESC key 4 and two selection keys 5 arranged at the operation unit 2a, wherein the Decision/ESC key 4 switches between the usual screen 7, the setting item indication 7a, and the setting contents indication 7b of the display screen 3, and decides the setting item in the setting item indication 7a and the setting contents in the setting contents indication 7b, and wherein the selection key 5 adjusts the volume level in the usual screen 7 of the display screen 3, and selects the setting item in the setting item indication 7a and the setting contents in the setting contents indication 7b.

## Description

### [Field of the Invention]

This invention relates to the device for detecting damage location of buried-pipe buried in the ground etc., in particular, it relates buried-pipe damage location detection device that detecting damage location of buried-pipe and having a universal design that can be used by both right-handed and left handed inspector.

### [Background of the Invention]

Usually, many buried-pipes such as gas pipes for supplying gas, water pipes for flowing liquid such as water, drain pipes, and pipeline for transporting oil are buried in the ground etc.

In addition, many buried-pipes are buried in the pillars and walls of structure such as buildings etc.
(Hereafter, except for a conventional example portion, these are named only described as a buried metal. Underground and in structure are only described as underground.)

These buried-pipes need to be maintained efficiently.

Many buried-pipes are buried in the ground etc., but if the buried-pipes are damaged due to natural disasters, aging deterioration of the buried-pipes, or construction work by another company, etc., there is a problem that the fluid flowing in the buried-pipe, for example, liquid such as tap water or gas leaks out of the buried-pipes from the damaged part of the buried-pipe.

Therefore, it is necessary to detect the damage location of buried-pipes immediately for accident prevention, repair work or economic reasons etc.

Various leakage sounds are generated from the damage location (leakage location) of the buried-pipes buried in the ground etc.

As the leakage sound, for example, when the buried-pipe is a water pipe, flowing water sound, water force sound, or impact sound etc. is generated.

These leakage sound become peculiar audible sounds due to friction between water or gas sprayed by the action of the pressure inside the buried-pipe and the damaged part of the buried-pipe.

The leakage sound propagating on the ground is a complex sound, and the sound quality of the leakage sound differs depending on condition such as occurrence status of damaged part (leakage part), soil quality, type of buried-pipe, water pressure inside the buried-pipe, depth(distance from the ground surface) etc.

That is, while leakage sound (complex sound) differs in the sound quality, respectively by putting various kinds of conditions of the four above-mentioned components and damaged location together, the frequency distribution does not show a steady value.

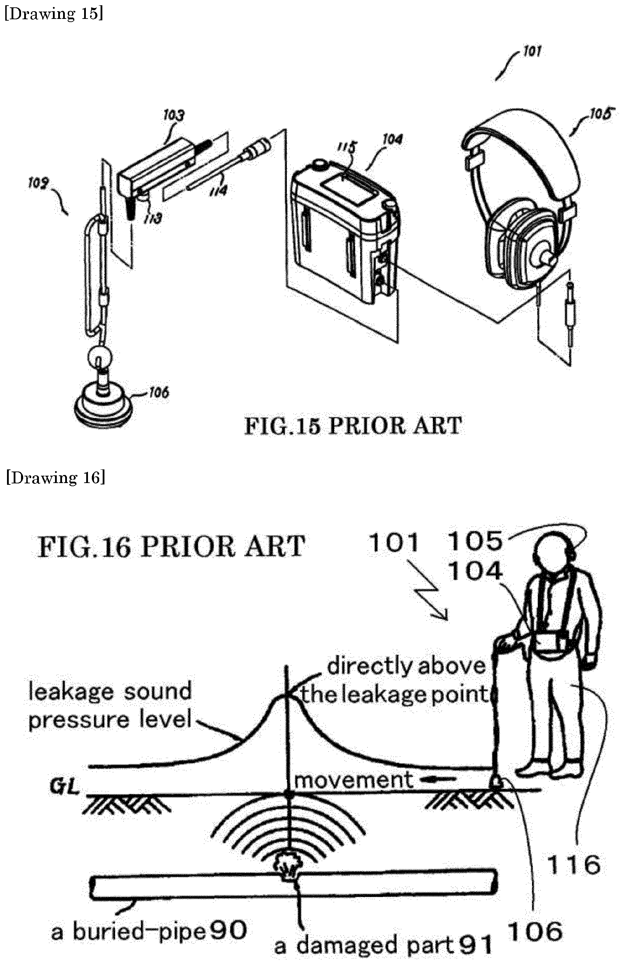

As a device for detecting a leakage sound, as shown in FIG. 15, there is a leakage detection device 101 comprising a vibration detecting device 102 having a pickup 106 including a piezo-electric element, a detection device body 104 including voltage amplifier for amplifying the voltage of an output signal and a plurality of kinds of noise removing means for removing noise from the output signal, and a head phone 105 (Patent Document 1).

A method for detecting a damaged part 91 in a buried-pipe 90 using this leakage detection device 101 is explained. As shown in FIG. 15 and FIG. 16, an inspector 116 holds a detection device body 104 on the waist with a belt and hangs it from the neck with a belt. Next, a grip member 103 provided with a sound listening switch 113 and the pickup 106 are connected with each other, and the grip member 103 and the detection device body 104 are connected with each other via a cable 114. Similarly, the head phone 105 and the detection device body 104 are connected with each other. In this state, as shown in FIG. 16, when the detection device body 104 is fixed to the front of the human body with a display device 115 (and various keys (switches)) of the detection device body 104 on the upper surface, and the head phone 105 is mounted on the head portion, and the pickup 106 is grounded on the ground surface, the inspector 116 is in a state in which the leakage sound from the ground can be captured.

When the power of the detection device body 104 is turned on, vibration noise (leakage sound) including leakage sound caused by the fluid flowing out from the damaged part 91 in the buried-pipe 90 and other surrounding noise propagates in the ground and is captured by the pickup 106 on the ground surface. This vibration noise (leakage sound) is noise eliminated and amplified by the detection device body 104, and is outputted by the head phone 105. In addition, this noise elimination is performed by setting of frequency of a filter and filtering the leakage sound.

Next, as shown in FIG. 16, the leakage sound is searched while moving the pickup 106 along the buried-pipe 90, and a point at which the vibration noise output from the headphone 105 becomes maximum is searched. It can be determined that the damaged part 91 exists on the buried-pipe 90 immediately below the point where the vibration noise becomes maximum. In addition, it is possible to determine the point at which the vibration noise is maximum from a vibration detection level displayed on the display device 115 of the detection device body 104

### [Prior art documents]

### [Patent documents]

[Patent documents 1]
JP 2009-2873, A

### [Description of the Invention]

### [Problem(s) to be Solved by the Invention]

However, as shown in FIG. 15 and FIG. 16, the detection device body 104 has a problem that the arrangement of the display device 115 and the various keys (switches) for operation and the arrangement of the connector for connection with the grip member 103 and the headphone 105 is designed for right-handed use.

Specifically, since the connector for connection is arranged on the right side, the connector for connection is arranged on the side opposite to the dominant hand for the left-handed inspector116, there is a problem that the hands or arms of the inspector 116 and a cable interfered with each other, the cable routing becomes complicated, detection work is disturbed, operability is deteriorated, and operation efficiency is remarkably lowered. Furthermore, since the arrangement of the keys (switches) for operation is arranged for right-handed use, there is also a problem that it is easy for the left-handed inspector 116 to operate the keys (switches) for operation erroneously. Further, if the detection device body 104 is held so that the connector for connection is arranged on the left side in order to prevent the cable and the dominant hand of the inspector 116 from interfering with each other, the display of the display device 115 and the keys for various operations are reversed, so that there is also a problem that visibility is poor and operability is deteriorated.

The present invention has been made to solve the above-mentioned problems, and an object of the present invention is to provide a universally designed device for detecting damage location of buried-pipe which improves operability by reducing the number of operating buttons as much as possible, and can be used for both right-handed and left-handed inspectors.

### [Means for Solving the Problem]

While a buried-pipe damage location detection device invention according to Claim 1 comprised by
a body being portable and having an operation unit arranged a display screen and an operation switch on an upper surface,
a pickup sensor with a hand switch connected to this body, and
a headphone connecting to the body and hearing a leakage sound caught by the pickup sensor,
furthermore, in the buried-pipe damage location detection device, the body has a function to filter the leakage sound, a function to set a cutoff frequency of a filter for filtering the leakage sound, a switch function of the operation switch, and a function to process the leakage sound to be able to heard with the headphone:
   The buried-pipe damage location detection device invention according to Claim 1 is characterized by the following things:
   The body has
   a screen reversal function to reverse an orientation of a screen displayed on the display screen,
   a function to reverse the switch function of the operation switch according to the orientation of the display screen, and
   a function to save a contents of a setting,
      the display screen consists of
   a starting screen displayed only at the time of starting,
   a setting item indication displayed a setting item,
   a setting contents indication displayed a setting contents of this setting item indication, and
   an usual screen displayed the setting contents of the setting and a volume level of leakage sound caught by the pickup sensor,
      the operation switch consists of one Decision/ESC key and two selection keys arranged at the operation unit,
      the Decision/ESC key switches between the usual screen, the setting item indication, and the setting contents indication of the display screen, and decides the setting item in the setting item indication and the setting contents in the setting contents indication, and
      the selection key adjusts the volume level in the usual screen of the display screen, and selects the setting item in the setting item indication and the setting contents in the setting contents indication.

In the invention according to Claim 1, the body according to Claim 2 has a filter through setting function does not filter the leakage sound.

In the invention according to Claim 1 - Claim 2, the body according to Claim 3 has a limiter setting function.

### [Effect of the Invention]

Since invention concerning to Claim 1 was constituted as mentioned above, a screen can be reversed according to a dominant hand of an inspector. Further, since a switch function can be reversed according to an orientation of the screen, so that the screen displayed on a display screen 3 can be easily read and the switch can be easily operated. Moreover, since an operation switch 8 arranged on a main body 2 has only three switches (one Decision/ESC key 4 and two selection keys 5), it is not necessary to operate a large number of operation buttons as in the prior art, and thus the operability is improved.

Further, since it also has a function of saving setting contents, it is only necessary to save complex setting items and setting contents, such as setting of a frequency band of a filter, so that work efficiency at a site is improved.

Furthermore, while operability such as connection operation of the pickup sensor 12, connection operation of headphone 10, and leading about of a cable, becomes very good, the operation range of the pickup sensor 12 also becomes large, and a motion is not limited like before. Moreover, since the connecting cables 10a and 12a, and the hand or arm of inspector does not interfere, operation efficiency improves remarkably, without becoming disturbance of detection work.

Since invention concerning Claim 2 was constituted as mentioned above, there is the same effect as above-mentioned Claim 1. Furthermore, it becomes unnecessary to carry out complicated switch operation for a setting of a filter frequency band, and is effective in the working efficiency in the site improving further.

Since invention concerning Claim 3 was constituted as mentioned above, there is the same effect as above-mentioned Claim 1 - Claim 2. Furthermore, conventionally, although limiter adjustment was not built, since the equipment of this invention has a limiter setting function, by carrying out limiter adjustment appropriately, it can apply limitation to an excessive incoming signal, and can reduce the crashing sound to an ear.

### [Brief Description of the Drawings]

[Fig. 1]

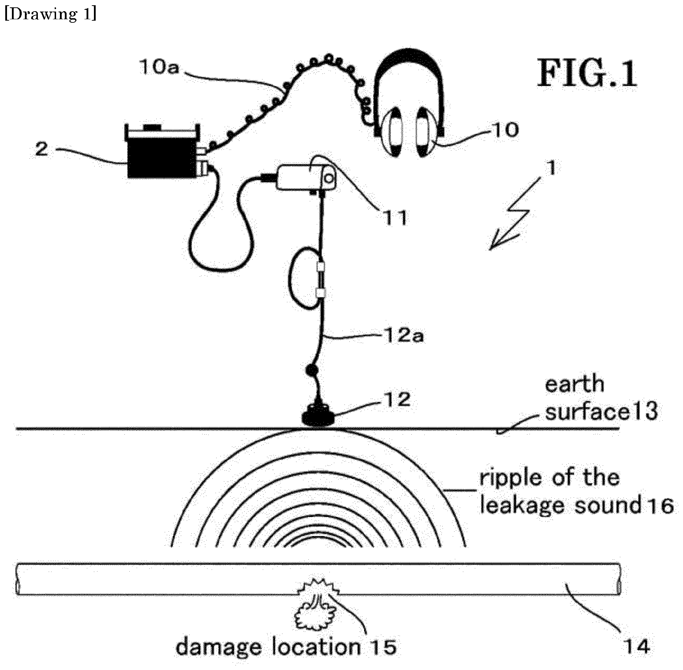

   Fig. 1 shows the embodiment of this invention and is a mimetic diagram showing the busy condition of the buried-pipe damage location detection device 1 by this invention.
[Fig. 2]

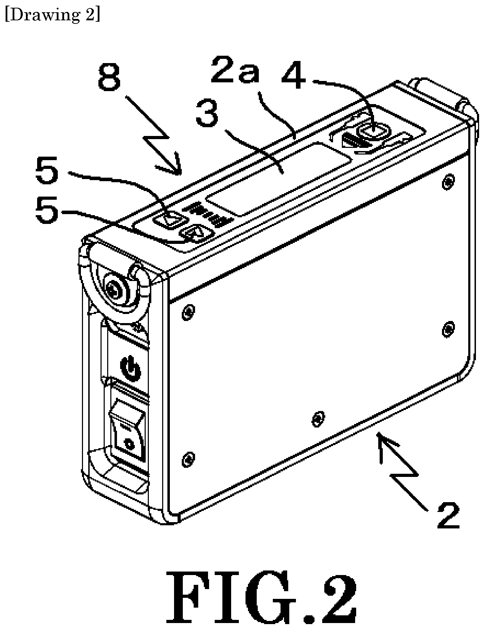

   Fig. 2 shows the embodiment of this invention and is a perspective view of the body 2 of the buried-pipe damage location detection device 1 by this invention.
[Fig. 3]

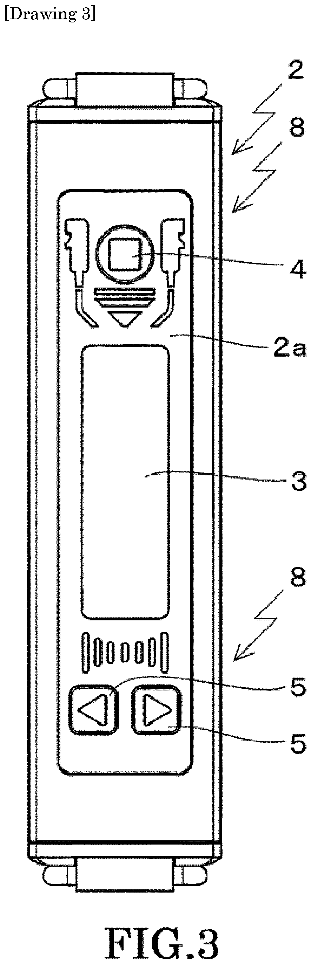

   Fig. 3 shows the embodiment of this invention and is a top view of the body 2 of the buried-pipe damage location detection device 1 by this invention.
[Fig. 4]

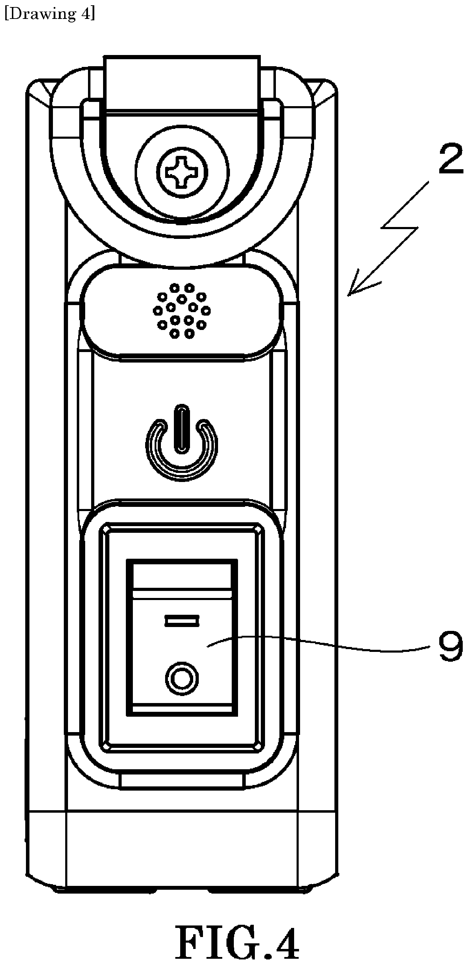

   Fig. 4 shows the embodiment of this invention and is a right side view of the body 2 of the buried-pipe damage location detection device 1 by this invention.
[Fig. 5]

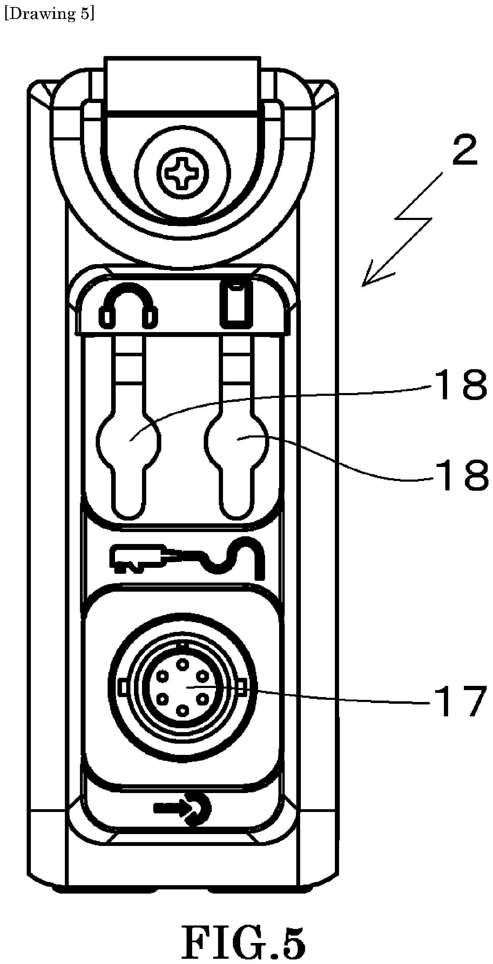

   Fig. 5 shows the embodiment of this invention and is a left side view of the body 2 of the buried-pipe damage location detection device 1 by this invention.
[Fig. 6]

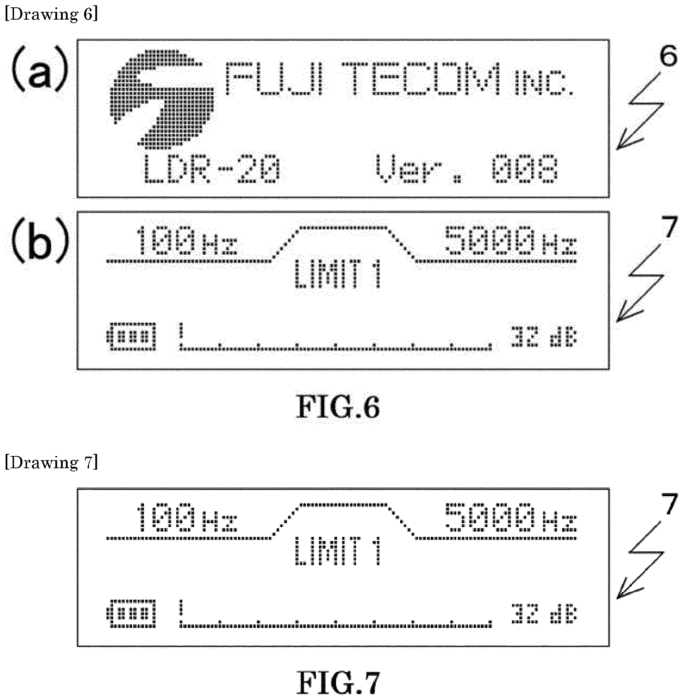

   Fig. 6 shows the embodiment of this invention and is a screen diagram showing the display screen 3 of the body 2 of the buried-pipe damage location detection device 1 by this invention, where (a) is the starting screen 6 when turning on the power switch 9, and (b) is the usual screen 7 when turning on the power switch 9.
[Fig. 7]
   Fig. 7 shows the embodiment of this invention, is a screen diagram showing the display screen 3 of the body 2 of the buried-pipe damage location detection device 1 by this invention, and is the usual screen 7 when adjusting the volume of the headphone 10.
[Fig. 8]

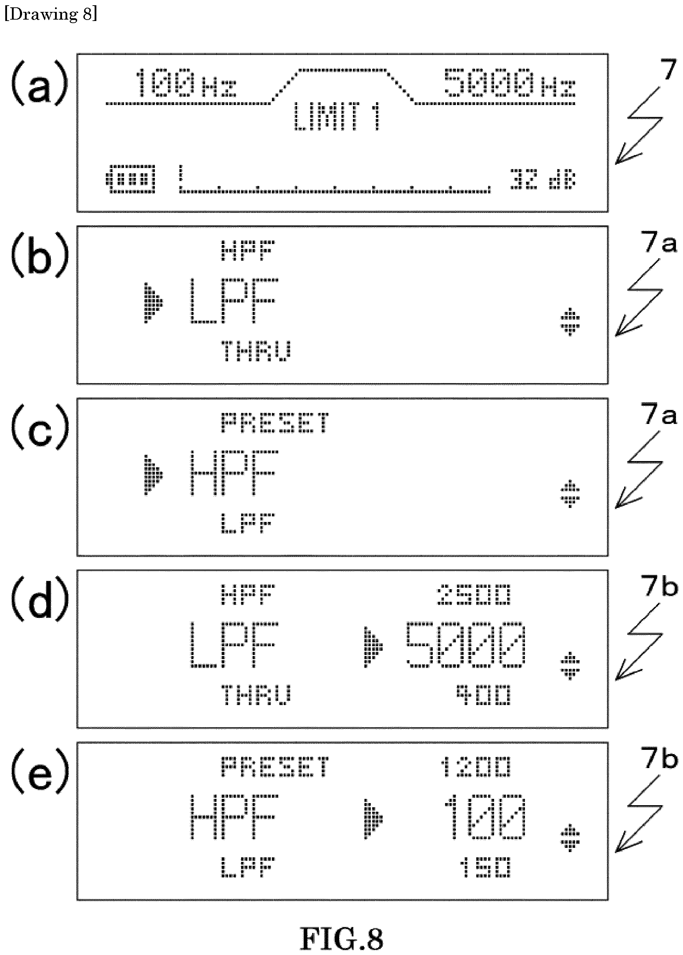

   Fig. 8 shows the embodiment of this invention and is a screen diagram showing the display screen 3 of the body 2 of the buried-pipe damage location detection device 1 by this invention, where (a) is the usual screen 7 which selects the frequency band of a filter, (b) is the setting item indication 7a at the time of selecting a low pass filter setting (LPF) as a setting item, (c) is the setting item indication 7a at the time of selecting a high pass filter setting (HPF) as a setting item, (d) is the setting contents indication 7b which shows an example of the contents of a setting at the time of selecting a LPF setting as a setting item, and (e) is the setting contents indication 7b which shows an example of the contents of a setting at the time of selecting a HPF setting as a setting item.
[Fig. 9]

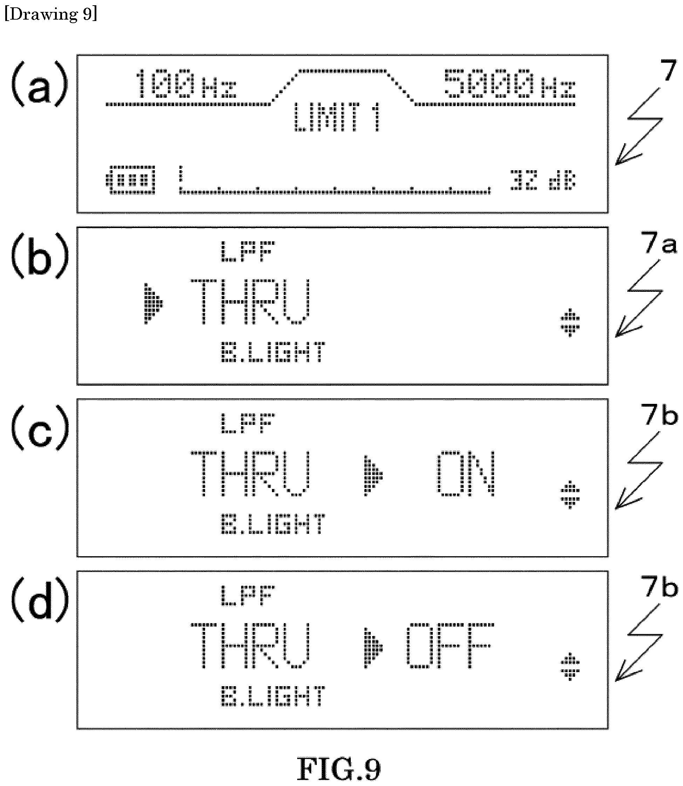

   Fig. 9 shows the embodiment of this invention and is a screen diagram showing the display screen 3 of the body 2 of the buried-pipe damage location detection device 1 by this invention, where (a) is the usual screen 7 and (b) is the setting item indication 7a at the time of selecting a filter through setting (THRU) as a setting item, (c) and (d) is the setting contents indication 7b which shows an example of the contents of a setting at the time of selecting a filter through setting as a setting item, furthermore, (c) is the setting contents indication 7b in the case of "ON" (when not passing a HPF/LPF circuit ), (d) is the setting contents indication 7b in the case of "OFF" (when following HPF/LPF setting).
[Fig. 10]

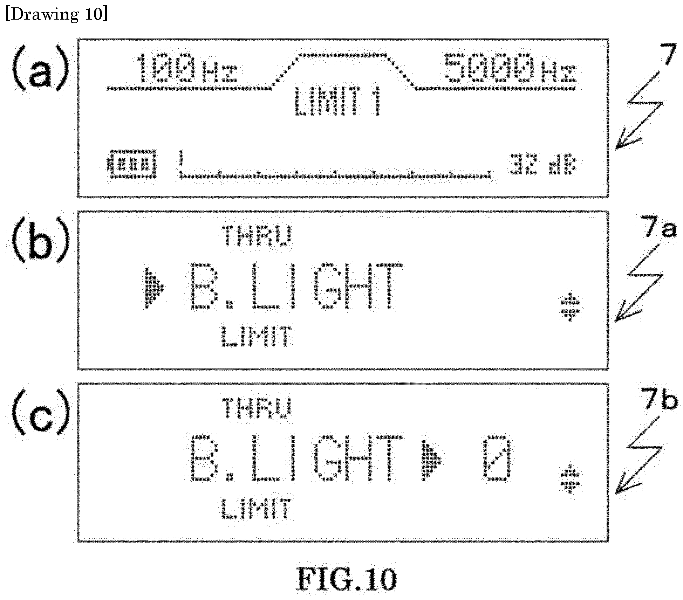

   Fig. 10 shows the embodiment of this invention and is a screen diagram showing the display screen 3 of the body 2 of the buried-pipe damage location detection device 1 by this invention, where (a) is the usual screen 7, (b) is the setting item indication 7a at the time of selecting a back light setting (B.LIGHT) as a setting item, and (c) is the setting contents indication 7b which shows an example of the contents of a setting at the time of selecting a back light setting as a setting item.
[Fig. 11]

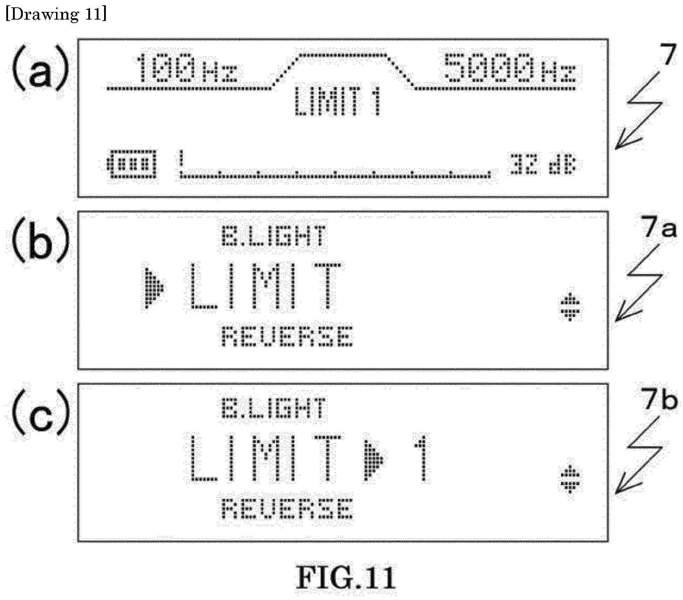

   Fig. 11 shows the embodiment of this invention and is a screen diagram showing the display screen 3 of the body 2 of the buried-pipe damage location detection device 1 by this invention, where (a) is the usual screen 7, (b) is the setting item indication 7a at the time of selecting a limiter setting (LIMIT) as a setting item, and (c) is the setting contents indication 7b which shows an example of the contents of a setting at the time of selecting a limiter setting as a setting item.
[Fig. 12]

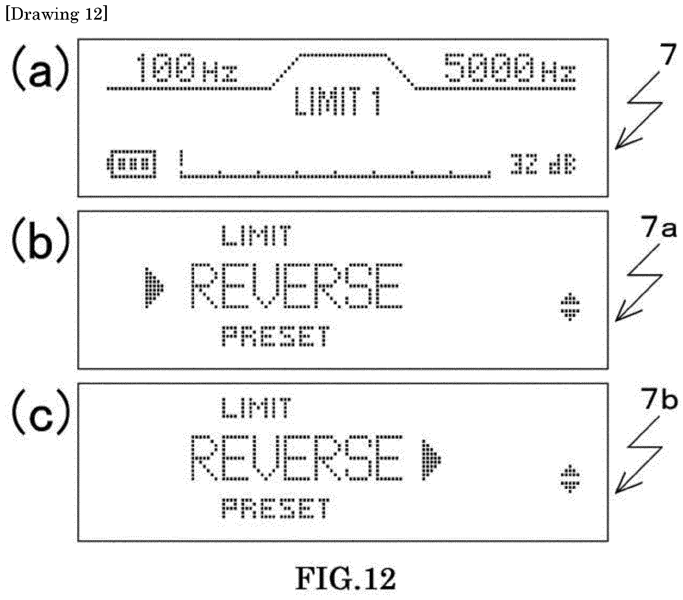

   Fig. 12 shows the embodiment of this invention and is a screen diagram showing the display screen 3 of the body 2 of the buried-pipe damage location detection device 1 by this invention, where (a) is the usual screen 7, (b) is the setting item indication 7a at the time of selecting a screen reversal setting (REVERSE) as a setting item, and (c) is the setting contents indication 7b which shows an example of the contents of a setting at the time of selecting a screen reversal setting as a setting item.
[Fig. 13]

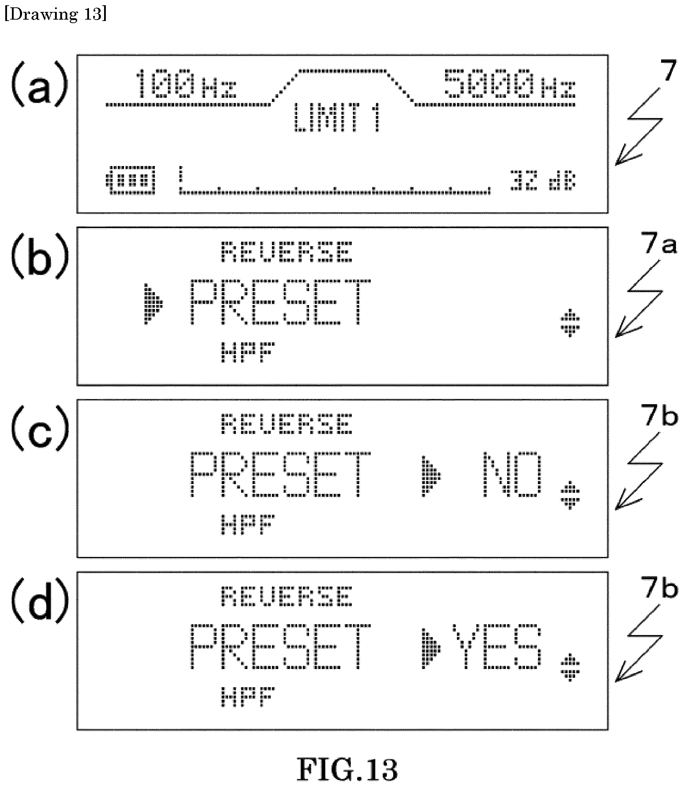

   Fig. 13 shows the embodiment of this invention and is a screen diagram showing the display screen 3 of the body 2 of the buried-pipe damage location detection device 1 by this invention, where (a) is the usual screen 7 and (b) is the setting item indication 7a at the time of selecting preset setting memory (PRESET) as a setting item at the time of starting, and (c) and (d) are the setting contents indication 7b which shows an example of the contents of a setting at the time of selecting setting memory (PRESET) as a setting item at the time of starting, furthermore, (c) is the setting contents indication 7b in the case of "NO" (when not keeping the various contents of a setting at the time of starting), and (d) is the setting contents indication 7b in the case of "YES" (when keeping the various contents of a setting at the time of starting).
[Fig. 14]

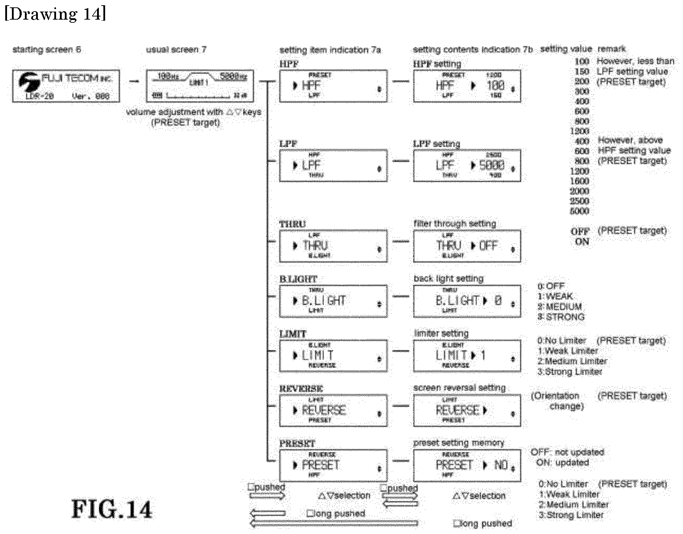

   Fig. 14 shows the embodiment of this invention and is a screen diagram showing the display screen 3 of the body 2 of the buried-pipe damage location detection device 1 by this invention, and is a screen transition diagram showing the starting screen 6, the usual screen 7, the setting item indication 7a at the time of various setting, the setting contents indication 7b, and the list of each setting value.
[Fig. 15]
   Fig. 15 shows a conventional example and is a perspective view showing the composition of the leakage detection device 101.
[Fig. 16]
   Fig. 16 shows a conventional example and is an explanatory diagram showing the case where the leakage detection device 101 detects the damaged part 91 of the underground pipe 90.

### [The form for inventing]

While a buried-pipe damage location detection device comprised by
a body being portable and having an operation unit arranged a display screen and an operation switch on an upper surface,
a pickup sensor with a hand switch connected to this body, and
a headphone connecting to the body and hearing a leakage sound caught by the pickup sensor,
furthermore, in the buried-pipe damage location detection device, the body has a function to filter the leakage sound, a function to set a cutoff frequency of a filter for filtering the leakage sound, a switch function of the operation switch, and a function to process the leakage sound to be able to heard with the headphone:
   wherein the body has
      a screen reversal function to reverse an orientation of a screen displayed on the display screen,
      a function to reverse the switch function of the operation switch according to the orientation of the display screen, and
      a function to save a contents of a setting,
   wherein the display screen consists of
      a starting screen displayed only at the time of starting,
      a setting item indication displayed a setting item,
      a setting contents indication displayed a setting contents of this setting item indication, and
      an usual screen displayed the setting contents of the setting and a volume level of leakage sound caught by the pickup sensor,
   wherein the operation switch consists of one Decision/ESC key and two selection keys arranged at the operation unit,
   wherein the Decision/ESC key switches between the usual screen, the setting item indication, and the setting contents indication of the display screen, and decides the setting item in the setting item indication and the setting contents in the setting contents indication, and
   wherein the selection key adjusts the volume level in the usual screen of the display screen, and selects the setting item in the setting item indication and the setting contents in the setting contents indication.

### [Embodiment 1]

The 1st embodiment of this invention is explained in detail based on Figs. 1 - Fig. 14.

Fig. 1 is a mimetic diagram showing the busy condition of the buried-pipe damage location detection device 1 by this invention. A buried-pipe damage location detection device 1 is constituted by a body 2, a pickup sensor 12 connected to the body 2 by a connecting cable 12a with a hand switch 11 interposed therebetween, and a headphone 10 connected to the body 2 by a connecting cable 10a. In addition, 13 is earth surface, 14 is a buried-pipe, 15 is a damaged location of the buried-pipe 14, and 16 is a ripple of a leakage sound propagated on the earth surface 13 from the damaged location 15.

Fig. 2 is a perspective view of the body 2 of the buried-pipe damage location detection device 1 viewed from above. Fig. 3 is a top view of the body 2 of the buried-pipe damage location detection device 1, and an upper surface of the body 2 is constituted an operation unit 2a of the body 2. Fig. 4 is a right side view of the body 2, and Fig. 5 is a left side view of the body 2.

Fig. 6 - Fig. 13 is a screen diagram showing the display screen 3 of the body 2, in which the starting screen 6, the usual screen 7, and the setting item indication 7a and the setting contents indication 7b of the usual screen 7 are displayed. The starting screen 6 is displayed only when the power switch 9 which is shown in Fig. 5 is turned on. The usual screen 7 is displayed various kinds of setting items by changing the setting item indication 7a, and while being shown for every setting item by pushing down the selection keys 5, the required contents of a setting and the required setting value for every setting item are shown on the setting contents indication 7b. Furthermore, while the setting item indication 7a and the setting contents indication 7b are shown, battery residual quantity and a volume level of the headphone 10 drawn in a bow diagrammatic chart are shown on usual screen 7.

Fig. 14 is a screen diagram showing the display screen 3 of the body 2, and is a screen transition diagram showing the starting screen 6, the usual screen 7, the setting item indication 7a at the time of various setting, the setting contents indication 7b, and the list of each setting value.

As shown in Figs. 2 -Fig. 3, the display screen 3 and the operation switch 8 are arranged at the operation unit 2a of the body 2. An operation switch 8 is comprised by one Decision / ESC key 4 (□ mark switch) and two selection keys 5 ( 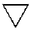 mark switch and △ mark switch) which are arranged at both ends in the long direction (longitudinal direction ) of the display screen 3.

The body 2 has a function which filters the leakage sound which the pickup sensor 12 caught, a function to set up the cutoff frequency of the filter which performs this filtering by the switch function of the operation switch 8, a screen reversal function to reverse direction of the screen shown on the display screen 3, a function to reverse the switch function of the operation switch 8 according to direction of the screen of the display screen 3, a function to store the contents of a setting, a filter through setting function which does not filter, and a limiter setting function. Furthermore, by depressing the selection keys 5, the body 2 has a function to adjust the volume level of headphone 10 in the usual screen 7, a function to select each setting item in the setting item indication 7a, and a function to select the contents of setting in the setting contents indication 7b.

One Decision / ESC key 4 (□ mark switch) of the operation switch 8 is comprised so that it change to the setting item indication 7a on the usual screen 7 by short push, and on the setting item indication 7a, it changes to the setting contents indication 7b, and on the setting contents indication 7b, it changes to the setting item indication 7a while deciding the contents of a setting. And one Decision / ESC key 4 (□ mark switch) of the operation switch 8 is comprised so that it change from the setting item indication 7a or the setting contents indication 7b to the usual screen 7 by long push.

Two selection keys ( 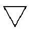 mark switch and △ mark switch) 5 of the operation switch 8 are comprised so that they can select until desired setting item is displayed on the display screen 3 by depressing 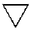 mark switch or △ mark switch of the selection keys 5 when the display screen 3 is the setting item indication 7a. Moreover, the selection keys 5 are comprised so that they can select until desired setting contents is displayed on the display screen 3 by depressing 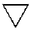 mark switch or △ mark switch when the display screen 3 is the setting contents indication 7b. Two selection keys 5 are also comprised so that a volume of the headphone 10 can be adjusted when the display screen 3 is the usual screen 7.

As shown in Fig. 4, the power switch 9 which performs ON and OFF of a power source is installed a right-hand side (side of the selection keys 5) of the body 2. Moreover, as shown in Fig. 5, a connector 17 for inserting a plug of the connecting cable 12a of the pickup sensor 12 and a jack 18 for inserting a plug of the connecting cable 10a of the headphone 10 are installed a left-hand side (side of the Decision / ESC key 4) of the body 2.

Next, a case of detecting the damaged location 15 of the buried-pipe 14 in the underground etc. using the buried-pipe damage location detection device 1 by this invention is explained.

First, as shown in Fig. 1 and Fig. 5, the plug of the connecting cable 10a of the headphone 10 is inserted into the jack 18 of the body 2 to connect the body 2 and the headphone 10. Next, the body 2 and the pickup sensor 12 are connected by the connecting cable 12a with the hand switch 11 interposed therebetween. Then, by inserting the plug of this connecting cable 12a into the connector 17 of the body 2, the body 2 and the pickup sensor 12 will be connected and the buried-pipe damage location detection device 1 will be assembled.

In this state, as shown in Fig. 16 of the conventional example, the inspector 116 fixes the body 2 (it is equivalent to the detection device body 104 shown in Fig. 16) around a waist of own body of the inspector 116 with the operation unit 2a facing upward using a shoulder strap. At this time, if the inspector 116 is right-handed, the operation unit 2a of the body 2 is fixed near the right waist, and if the inspector 116 is left-handed, the operation unit 2a of the body 2 is fixed near the left waist. At this time, a direction of the screen of the display screen 3 (and a direction of the switch function of the operation switch 8 according to the direction of this screen) is set by the setting item (F) mentioned later so that the connector 17 for inserting the plug of the connecting cable 12a of the pickup sensor 12 and the jack 18 for inserting the plug of the connecting cable 10a of the headphone 10 are on the front (direction of movement) side of the inspector 116.

Alternatively, the body 2 may be fixed to the front (near an abdomen) of the body of the inspector 116, and in this case, a direction of the screen of the display screen 3 (and a direction of the switch function of the operation switch 8 according to the direction of this screen) is set by the setting item (F) mentioned later so that the connector 17 for inserting the plug of the connecting cable 12a of the pickup sensor 12 and the jack 18 for inserting the plug of the connecting cable 10a of the headphone 10 are on the inspector's 116 dominant hand side.

Next, when the headphone 10 is equipped on a head and the pickup sensor 12 grounded the earth surface 13, the leakage sound 14 from underground can be detected.

Next, there are various kinds of setting items in the start of detection work of the leakage sound by the buried-pipe damage location detection device 1. Hereafter, with reference to Figs. 6 - fig. 13 and Fig. 14, it explains according to a setting item.

As shown in Fig. 6, Fig. (a) shows the display screen 3 at the time of starting, when the power switch 9 turns on, the starting screen 6 is displayed on the display screen 3 of the body 2, and then as shown in Fig. (b), the usual screen 7 is displayed on the display screen 3 of the body 2. In this case, if the setting item and its contents of setting when the buried-pipe damage location detection device 1 was used before are saved, i.e., if they are preset (the contents of setting are saved) by the setting item (G) described later, the saved setting item and its contents of setting displayed the usual screen 7 of the Fig. 7, the buried-pipe damage location detection device 1 is started by the setting. Next, if the hand switch 11 is pushed down, the headphone 10 becomes audible.

Setting items (A) - (G) are explained.
(A) When adjusting the volume of headphone 10, since the usual screen 7 is displayed on the display screen 3 as shown in Fig. 7, either of two selection keys 5 ( 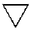 mark switch or △ mark switch) is pushed down to adjust the volume of headphone 10. This adjusted volume of the headphone 10 is displayed on the usual screen 7.
(B) Next, the case of setting a cutoff frequency of a filter or the case of changing the preset setting is explained. As shown in Figs. 8(a) - Fig.8 (e) and Fig. 14, the filter built in the body 2 is constituted by the high pass filter (HPF) and the low pass filter (LPF), each setting value (setting frequency) of the cutoff frequency of the filter of these HPF/LPF circuit can be set as eight steps. In the case of this embodiment, since there is a setting condition "HPF setting frequency" < "LPF setting frequency", a total of 54 types of filter combinations can be selected. Moreover, a setup of a narrow band filter is also possible.

On the usual screen 7 shown in Fig. 8 (a), it changed to the setting item indication 7a by depressing Decision / ESC key 4 (□ mark) of the operation switch 8 arranged at the operation unit 2a of the body 2. Next, by depressing either 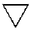 mark switch or △ mark switch of the selection keys 5, the setting item display 7a of a low-pass filter setting "LPF" shown in Fig. 8 (b) is selected when setting the cutoff frequency of the low-pass filter, the setting item display 7a of a high-pass filter setting "HPF" shown in Fig. 8 (c) is selected when setting the cutoff frequency of the high-pass filter. On this selected setting item display 7a, by depressing Decision / ESC key 4 (□ mark), it changed to the setting contents indication 7b of a low-pass filter setting "LPF" shown in Fig. 8 (d) or the setting contents indication 7b of a high-pass filter setting "HPF" shown in Fig. 8 (e). On this changed setting contents indication 7b, the frequency to be set can be selected by depressing either 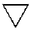 mark switch or △ mark switch of the selection keys 5, and can be set by long pressing Decision / ESC key 4 (□ mark) to decide.

(C) Next, when a leakage sound is heard directly without setting the cutoff frequency of a filter, as shown in Fig.9 (a) -Fig. 9(d), a filter through setting that does not pass through the HPF/LPF circuit, that is, does not perform filtering is also possible. On the usual screen 7 shown in Fig. 9 (a), it changed to the setting item indication 7a by depressing Decision / ESC key 4 (□ mark), and next, the setting item display 7a of a filter through setting "THRU" shown in Fig. 9 (b) is selected by depressing either 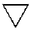 mark switch or △ mark switch of the selection keys 5, and then, it changed to the setting contents indication 7b of a filter through setting "THRU" shown in Fig. 9 (c) or Fig. 9 (d) by depressing Decision / ESC key 4 (□ mark). On this changed setting contents indication 7b, a setting of filtering is selected by depressing either 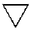 mark switch or △ mark switch of the selection keys 5, and when "THRU ON" shown in Fig. 9 (c) is displayed and Decision / ESC key 4 (□ mark) is long pressed to decide, filter through is set, and when "THRU OFF" shown in Fig. 9 (d) is displayed and Decision / ESC key 4 (□ mark) is long pressed to decide, the HPF/LPF setting is followed.

(D) The case where the back light of the display screen 3 is turned on during work in a dark place such as at night is explained. On the usual screen 7 shown in Fig. 10 (a), it changed to the setting item indication 7a by depressing Decision / ESC key 4 (□ mark), and next, the setting item display 7a of a back light setting "B.LIGHT" shown in Fig. 10 (b) is selected by depressing either 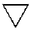 mark switch or △ mark switch of the selection keys 5, and then, it changed to the setting contents indication 7b of a back light setting "B.LIGHT" shown in Fig. 10 (c) by depressing Decision / ESC key 4 (□ mark). On this changed setting contents indication 7b, required brightness (it can adjust to four steps of 0: OFF, 1: WEAK, 2: MEDIUM, and 3: STRONG) is selected by depressing either 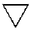 mark switch or △ mark switch of the selection keys 5, and the contents of a setting is decided by long pressing Decision / ESC key 4 (□ mark).

(E) Figs. 11 (a) - Fig. 11(c) shows the case which limiter adjustment is carried out. On the usual screen 7 shown in Fig. 11 (a), it changed to the setting item indication 7a by depressing Decision / ESC key 4 (□ mark), and next, the setting item display 7a of a limiter setting "LMIT" shown in Fig. 11 (b) is selected by depressing either 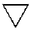 mark switch or △ mark switch of the selection keys 5, and then, it changed to the setting contents indication 7b of a limiter setting "LMIT" shown in Fig. 11 (c) by depressing Decision / ESC key 4 (□ mark). On this changed setting contents indication 7b, required contents of a setting of limiter (it can adjust to four steps of 0: NO LIMITER, 1: WEAK LIMITER, 2: MEDIUM LIMITER, and 3: STRONG LIMITER) is selected by depressing either 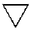 mark switch or △ mark switch of the selection keys 5, and the contents of a setting is decided by long pressing Decision / ESC key 4 (□ mark).

(F) Next, a function for reversing an orientation of the screen of the display screen 3 and reversing the switch function of the operation switch 8 according to the orientation of the screen is explained so that the inspector 116 can work efficiently regardless of whether the dominant hand of the inspector 116 is right-handed or left-handed. On the usual screen 7 shown in Fig. 12 (a), it changed to the setting item indication 7a by depressing Decision / ESC key 4 (□ mark), and next, the setting item display 7a of a screen reversal setting "REVERSE" shown in Fig. 12 (b) is selected by depressing either 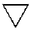 mark switch or △ mark switch of the selection keys 5, and then, it changed to the setting contents indication 7b of a screen reversal setting "REVERSE" shown in Fig. 12 (c) by depressing Decision / ESC key 4 (□ mark). On this changed setting contents indication 7b, required orientation of the screen of the display screen 3 is selected by depressing either 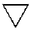 mark switch or △ mark switch of the selection keys 5, and the contents of a setting is decided by long pressing Decision / ESC key 4 (□ mark). Under the present circumstances, it is comprised so that the switch function of the operation switch 8 is also reversed according to the orientation of the screen of the display screen 3.

Thus, since the orientation of the screen of the display screen 3 is reversed and the switch function of the operation switch 8 is also reversed according to the orientation of the screen of the display screen 3, the buried-pipe damage location detection device which the inspector 116 can work efficiently regardless of whether the dominant hand of the inspector 116 is right-handed or left-handed is obtained. Therefore, a universally designed "buried-pipe damage location detection device" regardless of whether the dominant hand of the inspector 116 is right-handed or left-handed without impairing good operability and work efficiency is obtained.

(G) When the contents of the setting would like to saved for the next operation, on the usual screen 7 shown in Fig. 13 (a), it changed to the setting item indication 7a by depressing Decision / ESC key 4 (□ mark), and next, the setting item display 7a of a preset setting memory "PRESET" shown in Fig. 13 (b) is selected by depressing either 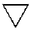 mark switch or △ mark switch of the selection keys 5, and then, it changed to the setting contents indication 7b of a preset setting memory "PRESET NO" shown in Fig. 13 (c) by depressing Decision / ESC key 4 (□ mark). On this changed setting contents indication 7b, the setting contents indication 7b of a preset setting memory "PRESET YES" shown in Fig. 13 (d) is selected by depressing either 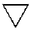 mark switch or △ mark switch of the selection keys 5, and the volume of headphone 10, the screen reversal setting (and reversal setting of the switch function of the operation switch 8 according to the orientation of the screen of the display screen 3), the filter setting, the filter through setting, and the limiter setting are saved by long pressing Decision / ESC key 4 (□ mark) to decide.

Thus, after setting the buried-pipe damage location detection device 1, detection work of the leakage sound is performed. As shown in Fig. 16 (conventional example) and Fig. 1, the inspector 116 turns on the power switch 9 after equipping own body with the body 2. Next, the leakage sound from the damage location 15 of the buried-pipe 14 is looked for moving the pickup sensor 12 along the earth surface 13, and a point where the leakage sound output from the headphone 10 is maximized is searched. The damage location 15 exists on the buried-pipe 14 directly below the point where the leakage sound is maximum can be determined.

### [Industrial applicability]

The buried-pipe damage location detection device by this invention is not limited to detecting the leakage sound from the damaged location of the buried-pipe currently buried in the ground like a water pipe, a gas pipe, and a drain pipe. Since the buried-pipe damage location detection device by this invention can also detect the leakage sound from the damaged location of the buried-pipe currently buried in a pillar or wall of a building, it can be widely used.

### [Description of Notations]

- 1: Buried-Pipe Damage Location Detection Device
- 2: Body of Buried-Pipe Damage Location Detection Device
- 2a: Operation Unit of Body 2
- 3: Display Screen of Body 2
- 4: Decision/ESC Key
- 5: Selection Keys
- 6: Starting Screen of Display Screen 3
- 7: Usual Screen of Display Screen 3
- 7a: Setting Item Indication of Usual Screen 7
- 7b: Setting Contents Indication of Usual Screen 7
- 8: Operation Switch
- 9: Power Switch
- 10: Headphone
- 11: Hand Switch
- 12: Pickup Sensor
- 14: Buried-Pipe
- 15: Damage Location
- 16: Waveform of Leakage Sound

## Claims

1. A Buried-Pipe Damage Location Detection Device comprising:
a body being portable and having an operation unit arranged a display screen and an operation switch on an upper surface,
a pickup sensor with a hand switch connected to this body, and
a headphone connecting to the body and hearing a leakage sound caught by said pickup sensor;
at least said body has a function to filter said leakage sound, a function to set a cutoff frequency of a filter for filtering said leakage sound, a switch function of said operation switch, and a function to process said leakage sound to be able to heard with said headphone,
wherein said body has
a screen reversal function to reverse an orientation of a screen displayed on said display screen,
a function to reverse said switch function of said operation switch according to the orientation of said display screen, and
a function to save a contents of a setting,
wherein said display screen consists of
a starting screen displayed only at the time of starting,
a setting item indication displayed a setting item,
a setting contents indication displayed a setting contents of this setting item indication, and
an usual screen displayed the setting contents of the setting and a volume level of leakage sound caught by said pickup sensor,
wherein said operation switch consists of one Decision/ESC key and two selection keys arranged at said operation unit,
wherein said Decision/ESC key switches between the usual screen, the setting item indication, and the setting contents indication of said display screen, and decides the setting item in said setting item indication and the setting contents in said setting contents indication, and
wherein said selection key adjusts the volume level in said usual screen of said display screen, and selects the setting item in said setting item indication and the setting contents in said setting contents indication.

2. A Buried-Pipe Damage Location Detection Device according to Claim 1, said body has a filter through setting function does not filter said leakage sound.

3. A Buried-Pipe Damage Location Detection Device according to Claim 1 - Claim 2, said body has a limiter setting function.
